# EUROPEAN PATENT APPLICATION

(11) **EP 2 487 842 A1**
(43) Date of publication of application: **15.08.2012**
(21) Application number: 10822036.9
(22) Date of filing: 06.10.2010
(51) Int. Cl.: H04L 12/56, H04L 12/66

(54) **COMPUTER SYSTEM AND MONITORING METHOD FOR COMPUTER SYSTEM**

(30) Priority: 07.10.2009 JP 2009233888
(71) Applicant: NEC Corporation, Tokyo 108-8001 (JP); NEC Soft, Ltd., Tokyo 136-8627 (JP)
(72) Inventor: EHARA Koji, Tokyo 108-8001 (JP); MASUDA Takahisa, Tokyo 136-8627 (JP)
(74) Representative: Vossius & Partner
(86) International application number: PCT/JP2010/067523
(87) International publication number: WO 2011/043366

(57) **Abstract**

A computer system according to the present invention has: a switch configured to forward a received packet data to a destination in accordance with flow that is set in the switch; and a controller configured to set flow with respect to the switch, in response to first-packet receipt notification from the switch. The switch transmits the first-packet receipt notification to the controller and notifies the controller of a port number included in the received packet data. The controller obtains, from a server, an application name of an application using the port number and records, on a memory device, a correspondence relationship between the application name and the flow that is set with respect to the switch. It is thus possible to monitor statistical information with respect to each application, without being affected by a method of allocating port numbers to applications.

## Description

### TECHNICAL FIELD

The present invention relates to a computer system and a method of monitoring the computer system. In particular, the present invention relates to a technique of monitoring communication traffic with respect to each application.

### BACKGROUND ART

In recent years, it has become possible to perform fault recovery, load balancing and the like in a computer system by collecting and monitoring statistical information of each line in a network. It is desirable that such the monitoring of the statistical information can be performed with respect to not only each line but also to each application.

For example, Japanese Patent Publication JP-2000-209200 discloses a device that identifies a communication flow based on a port number extracted from a packet and a flow table and monitors (quality monitoring, charging) traffic volume of the communication flow (see Patent Literature 1). Patent Literature 1 describes that identifying application based on the port number makes it possible to charge depending on application usage.

Moreover, Japanese Patent Publication JP-2008-72496 discloses a monitoring system that identifies application protocol, a packet source and a packet destination based on header information of a packet data and collects statistical information and traffic volume with respect to each application (see Patent Literature 2).

Furthermore, Japanese Patent Publication 2005-51736 discloses a technique that collects statistical information of packet data associated with a combination (rule) of a protocol type such as TCP / UDP, a TCP/IP port number, an IP address and the like set in a flow table and thereby monitors statistical information with respect to each application (see Patent Literature 3).

Meanwhile, the port number used in inter-application communication is previously set in some cases while in other cases it is arbitrarily set at a time of session establishment. If the port number is arbitrarily set in this manner, it is not possible to identify application based on the port number in a case of a system that identifies traffic based on the port number included in header information of the packet. For example, when one application performs communication with a plurality of applications, a source port number or a destination port number is arbitrarily set. In this case, the conventional technique can monitor the traffic volume between applications or the like with respect to each line but cannot monitor it with respect to each application. Furthermore, in the case of the conventional technique, in order to associate a monitoring target line with an application, it is necessary to install a line tracer or the like on a network and make analysis to identify an application associated with the monitoring target line.

A method of identifying a monitoring target application based on the port number that is arbitrarily set is disclosed, for example, in Japanese Patent Publication 2008-219383 (see Patent Literature 4). Specifically, Patent Literature 4 discloses a technique that identifies application communication between user terminals by using port numbers that are arbitrarily allocated to respective user terminals. Here, the port number allocated by an application control device to each application is notified to a collecting probe device through a manager device. The collecting probe device can monitor traffic volume or the line with respect to each application, by monitoring packet data that include the notified port number.

### CITATION LIST

### PATENT LITERATURE

[Patent Literature 1] Japanese Patent Publication JP-2000-209200
[Patent Literature 2] Japanese Patent Publication JP-2008-72496
[Patent Literature 3] Japanese Patent Publication JP-2005-51736
[Patent Literature 4] Japanese Patent Publication JP-2008-219383

### SUMMARY OF INVENTION

According to the technique described in Patent Literature 4, information for identifying the monitoring target application (e.g. port number) must be notified to all the collecting probe devices in the system. Moreover, the manager device notifies all the collecting probe devices of the port number every time the port number is allocated to the application.

In a case of a computer system where an arbitrary port number is allocated to an application at a time of session establishment as described above, a port number is notified to all collecting probe devices in a system every time new inter-application communication occurs. That is, in response to the occurrence of a new inter-application communication, the port number is notified also to a collecting probe device monitoring traffic that is not related to the application communication. Moreover, even if a packet data including the port number does not pass through a collecting probe device, the collecting probe device needs to determine whether or not the port number is included in a received packet data every time receiving packet data. In this manner, heavy load is imposed on the manager device and the collecting probe device in the conventional technique, and thus it is required to prepare a manager device and a collecting probe that have high processing ability. Therefore, in the case of the conventional technique, costs of the entire system are increased.

Moreover, if the collecting probe device is installed in a switch, the port number is notified also to a switch through which the application communication traffic does not pass and this switch needs to perform monitoring processing with respect to the packet data that does not pass through, as in the case of the above. In particular, in a case where a size of the system is large and hence the numbers of monitoring target applications and switches (collecting probe devices) are large, the amount of processing required for notification of the port number and the amount of unnecessary monitoring (monitoring of traffic that does not pass through) by each switch (collecting probe device) become enormous.

An object of the present invention is to provide a computer system that can monitor statistical information with respect to each application without being affected by a method of allocating port numbers to applications.

Another object of the present invention is to provide a computer system that monitors statistical information with respect to each application with omitting unnecessary monitoring processing.

For solving the above-described problem, the present invention adopts the following means.

A computer system according to the present invention has: a switch configured to forward a received packet data to a destination in accordance with flow that is set in the switch; a controller configured to set flow with respect to the switch, in response to first-packet receipt notification from the switch; and a server having an application. If the received packet data does not match a rule indicated by the flow that is set in the switch, the switch transmits the first-packet receipt notification to the controller and notifies the controller of a port number included in the received packet data. The controller obtains, from the server, an application name of an application using the port number and records, on a memory device, a correspondence relationship between the application name and the flow that is set with respect to the switch.

A method of monitoring a computer system according to the present invention is used in the computer system. The computer system has: a switch configured to forward a received packet data to a destination in accordance with flow that is set in the switch; and a controller configured to set flow with respect to the switch, in response to first-packet receipt notification from the switch. The method of monitoring the computer system according to the present invention includes: transmitting, by the switch, the first-packet receipt notification to the controller and notifies the controller of a port number included in the received packet data, if the received packet data does not match a rule indicated by the flow that is set in the switch; obtaining from a server, by the controller, an application name of an application using the port number; and recording on a memory device, by the controller, a correspondence relationship between the application name and the flow that is set with respect to the switch.

According to the present invention, even if port numbers allocated to applications are unknown, the application can be identified by using the port number that is obtained through notification of the first-packet that passes through the switch. Therefore, even if a port number is dynamically allocated to an application, the controller according to the present invention can associate the application with flow that controls the packet forwarding.

According to the present invention, it is thus possible to monitor statistical information with respect to each application, without being affected by a method of allocating port numbers to applications.

Moreover, since statistical information can be collected with respect to each flow, it is possible to monitor the statistical information with respect to each application with omitting unnecessary monitoring processing.

### BRIEF DESCRIPTION OF DRAWINGS

The above and other objects, advantages and features of the present invention will be more apparent from the following description of certain exemplary embodiments taken in conjunction with the accompanying drawings.
Fig. 1 is a diagram showing a configuration of a computer system according to an exemplary embodiment of the present invention.
Fig. 2 is a diagram showing a configuration of an open flow controller according to the present invention.
Fig. 3 is a diagram showing an example of a configuration of a flow table retained by the open flow controller according to the present invention.
Fig. 4 is a diagram showing an example of a configuration of an application-port correspondence table retained by the open flow controller according to the present invention.
Fig. 5 is a diagram showing an example of a configuration of a statistical table retained by the open flow controller according to the present invention.
Fig. 6 is a diagram showing a configuration of an open flow switch according to the present invention.
Fig. 7 is a diagram showing an example of a flow table retained by a switch according to the present invention.
Fig. 8 is a diagram showing an example of a configuration of a statistical table retained by the switch according to the present invention.
Fig. 9 is a diagram for explaining Open Flow control according to the present invention.
Fig. 10 is a sequence diagram showing an operation of preparation processing for system monitoring according to the present invention.
Fig. 11 is a sequence diagram showing an operation of statistical information acquisition processing for system monitoring according to the present invention.
Fig. 12 is a diagram for explaining a method of monitoring inter-application communication in a first exemplary embodiment.
Fig. 13 is a diagram for explaining a method of monitoring inter-application communication in a second exemplary embodiment.
Fig. 14 is a diagram for explaining a method of monitoring inter-application communication in a third exemplary embodiment.

### DESCRIPTION OF EMBODIMENTS

Exemplary embodiments of the present invention will be described hereinafter with reference to the attached drawings. In the drawings, the same or similar reference numeral indicates the same, similar or equivalent component.

### (Configuration of Computer System)

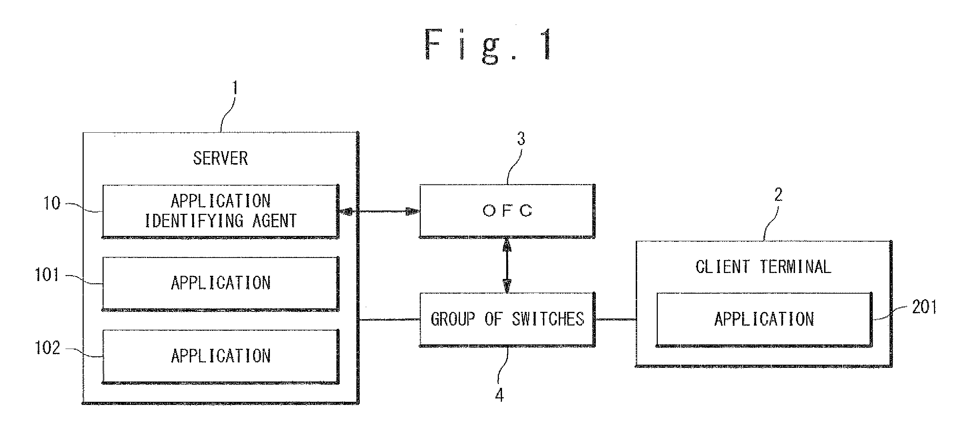

A configuration of a computer system according to the present invention will be described below with reference to Figs. 1 to 9. Fig. 1 is a diagram showing a configuration of a computer system according to the present invention. The computer system according to the present invention has an open flow controller 3 (hereinafter referred to as an OFC 3), a server 1 and a client terminal 2 that are connected through a network including a group of switches 4. The client terminal 2 may be provided in an external network (e.g.: Internet) that is connected to the computer system through the group of switches 4. The group of switches 4 includes at least one open flow switch 4i (hereinafter referred to as an OFS 4i).

It is preferable that plural servers 1 and plural client terminals 2 are provided. For ease of explanation, one server 1 and one client terminal 2 are shown in Fig. 1. If there are plural servers 1 and plural client terminals 2, they are connected with each other through the group of switches 4. Moreover, the number of the OFC 3 is not limited to one but may be plural. In the latter case, the group of switches 4 and the server 1 as a control target may be determined with respect to each OFC 3. Furthermore, a load balancer 5 that performs load balancing with respect to a plurality of servers 1 may be provided between the client terminal 2 and the group of switches, which will be described later.

The server 1 is a computer device having a CPU, a main memory device and an external memory device not shown and achieves functions of an application identifying agent 10, a plurality of applications 101 and 102 by executing a program stored in the external memory device. The functions achieved by executing application software will be hereinafter referred to as applications 101 and 102. The server 1 can function differently depending on the applications 101 and 102 and achieves functions such as a Web server, a file server and an application server. For example, when the server 1 functions as a Web server, the applications 101 and 102 transmit HTML documents and image data stored in a memory device (not shown) to the client terminal 2 in response to request from an application 201 (e.g.: Web browser) of the client terminal 2. Moreover, the applications 101 and 102 may execute, in response to request from the client terminal (application 201), various processing, various data generation and transaction processing in cooperation with data base.

It is preferable that the applications 101 and 102 perform communication with the client terminal 2 (application 201) based on TCP or UDP. In this case, when establishing session between the server 1 and the client terminal 2, an OS (Operating System) allocates port numbers (0 to 65535) to the respective applications 101, 102 and 201. As a method of allocating the port numbers, allocating predetermined port numbers (reserved port numbers) in a fixed manner, dynamically allocating reserved port numbers or unofficial port numbers at every session establishment and the like are known.

In a case of typical inter-application communication in a server-client model, a packet data is first transmitted from the client-side to the server-side. It is therefore preferable that reserved port numbers are allocated to the applications 101 and 102 of the server 1 in a fixed manner. For example, a well-known port number (any of 0 to 1023) depending on the function is allocated to the application 101 of the server 1. Alternatively, any numbers of 1024 to 49151 may be allocated as reserved port numbers to the applications 101 and 102 of the server 1 in a fixed manner. Alternatively, any numbers of 49152 to 65535 may be dynamically allocated as private port numbers to the applications 101 and 102.

The application identifying agent 10 uses a port number notified from the OFC 3 as a key to identify a name (hereinafter referred to as an application name) of an application to which the notified port number is allocated. The application identifying agent 10 notifies the identified application name to the OFC 3. More specifically, the port numbers allocated by the OS on the server 1 to the applications 101 and 102 are recorded on the memory device in the server 1 in a form of table associated with respect to each process (not shown). The application identifying agent 10 refers to the table to extract an application name corresponding to the process ID associated with the notified port number and transmits the application name to the OFC 3. Here, a protocol used in the layer 4 (e.g. TCP or UDP) is identified based on the protocol identifier notified from the OFC 3.

The OFC 3 controls communications in the system based on the Open Flow technique. The Open Flow technique means that a controller (the OFC 3 here) sets route information for each multi layer and each flow in a switch in accordance with routing policy (flow : rule + action), to perform route control and node control. As a result, the route control function is separated from a router and the switch and centralized control by the controller enables optimum routing and traffic management. The switch (OFS 4i) to which the Open Flow technique is applied treats communication as END2END flow, which is different from a case of the conventional router and switch where communication is handled in units of packet or frame.

More specifically, the OFC 3 sets flow (rule + action) with respect to each switch and node to control an operation (e.g. relay operation of packet data) of the switch and node. Here, the switch controlled by the OFC 3 is exemplified by the OFS 4i, a virtual switch and the like, and the node controlled by the OFC 3 is exemplified by the server 1, a virtual machine operating on the server 1 and the like.

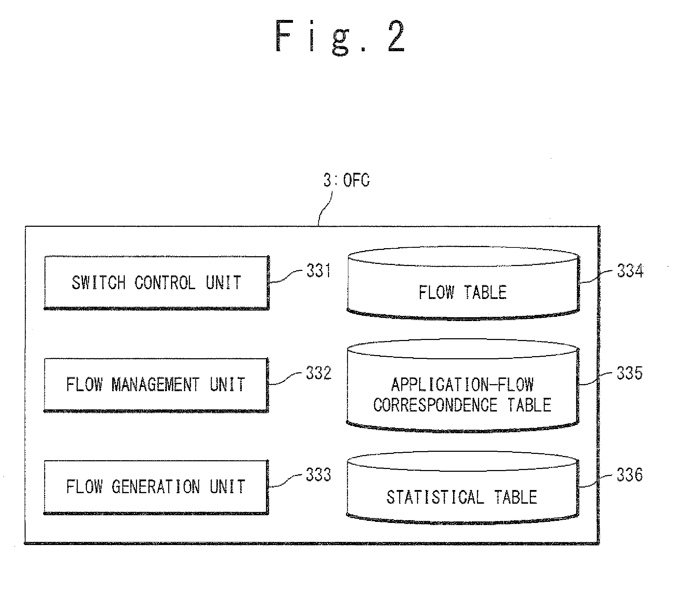

Fig. 2 is a diagram showing a configuration of the OFC 3 according to the present invention. It is preferable that the OFS 3 is achieved by a computer having a CPU and a memory device. In the OFC 3, the CPU not shown executes a program stored in the memory device to achieve respective functions of a switch control unit 331, a flow management unit 332 and a flow generation unit 333 shown in Fig. 2.

The switch control unit 331 sets or deletes a flow (rule + action) with respect to each switch and node in accordance with a flow table 334. The OFS 4i according to the present invention refers to the set flow to execute an action (e.g. relay or discard of a packet data) associated with a rule corresponding to header information of a received packet. Details of the rule and the action will be described later.

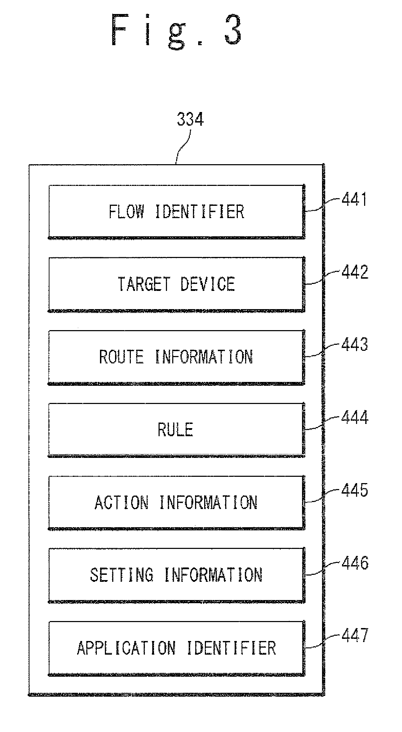

Fig. 3 is a diagram showing an example of a configuration of the flow table 334 retained by the OFC 3 according to the present invention. Referring to Fig. 3, a flow identifier 441 for identifying flow, an identifier (target device 442) for identifying a target (switch, node) of the flow setting, route information 443, rule 444, action information 445 and setting information 446 are set in the flow table 334 with being associated with each other. In the flow table 334, flow (rule 444 + action information 445) is set with respect to all the switches and nodes as control targets by the OFC 3. Moreover, information about a method of handling communication such as QoS and encryption information with respect to each flow may be defined in the flow table 334.

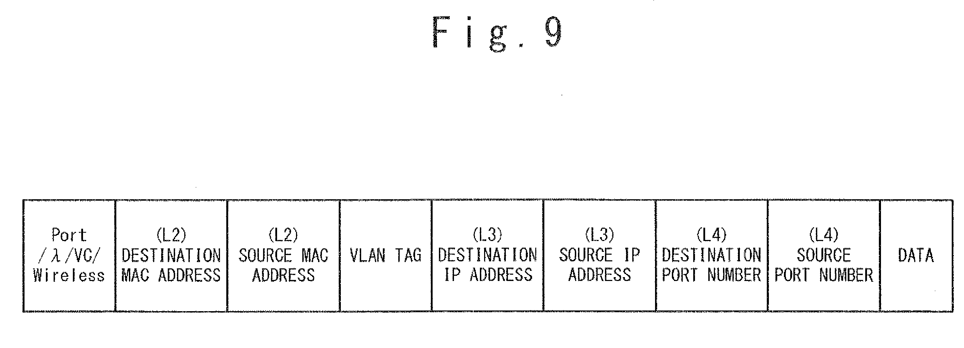

For example, the rule 444 is defined as a combination of addresses and identifiers from the layer 1 to the layer 4 of the OSI (Open Systems Interconnection) Reference model included in header information of a packet data of TCP/IP. For example, a combination of a physical port of the layer 1, a MAC address of the layer 2, an IP address of the layer 3, a port number of the layer 4 and a VLAN tag shown in Fig. 9 is set as the rule 444. Here, the address and the identifier such as the port number set as the rule 444 may have a certain range. Moreover, it is preferable that a source and a destination are treaded distinctively when setting the address and the like in the rule 444. For example, a range of a destination MAC address, a range of a destination port number for identifying a connection-destination application and a range of a source port number for identifying a connection-source application are set as the rule 444. Furthermore, an identifier for identifying data transfer protocol may be set in the rule 444.

For example, a method of handling a TCP/ IP packet data is defined in the action information 445. For example, information indicating whether or not to relay a received packet data and destination when relaying it are set. Moreover, information instructing to copy or discard a received packet data may be set in the action information 445.

The route information 443 is information for identifying a route to which the flow (rule 444 + action information 445) is applied. This is an identifier associated with communication route information.

The setting information 446 is information that indicates whether or not the flow (rule 444 + action information 445) is currently set. Since the setting information 446 is associated with the target device 442 and the route information 443, it is possible to check whether or not the flow is being set with respect to each communication route and to check whether or not the flow is being set with respect to each switch and node on the communication route. Moreover, the setting information 446 includes information indicating whether the generated flow is in an enabled state (valid) or in an disabled state (invalid). The OFC 3 refers to the setting information 446 to set only the valid flow in the OFS without setting the invalid flow.

The flow management unit 332 refers to the flow table 334 to extract the flow (rule 444 + action information 445) associated with the header information of a first-packet notified from the OFS 4i and notifies the switch control unit 331 of the extracted flow. Here, the first-packet means a packet received by the OFS 4i and having the header information that does not match the flow set in the OFS 4i. The header information transmitted from the OSF4i together with the notification of the first-packet includes a reception port of the switch, a VLAN number, a source MAC address, a destination MAC address, an Ethernet (registered trademark) type information (identifier for identifying a type of upper layer protocol such as IP, ARP and IPX), a source IP address, a destination IP address, a L4 protocol information (identifier for identifying a type of upper layer protocol such as TCP, UDP and ICMP), a source TCP/IP port number and a destination TCP/IP port number. Based on the source MAC address, the destination MAC address, the source IP address and the destination IP address in the notified header information, the flow management unit 332 identifies a source device and a destination device regarding the first-packet received by the OFS 4i. Then, the flow management unit 332 refers to the communication route between the identified devices and topology to determine the action that the OFS 4i should perform (if the action is an relaying operation, the destination also is determined) and extracts the flow associated with the OFS i from the flow table 334.

If the flow regarding the communication between the devices identified based on the header information notified from the OFS 4i does not exist in the flow table 334, the flow management unit 332 may instruct the flow generation unit 333 to generate the flow. The flow management unit 332 adds the flow identifier 441 to the flow (rule 444 + action information 445) generated by the flow generation unit 333 and records it on the memory device (flow table 334). At this time, an identifier of the communication route to which the flow is applied (route information 443) and an identifier of the switch or node to which the flow is applied (target device 442) are added to the flow (rule 444 + action information 445). After that, the flow management unit 332 notifies the switch control unit 331 of the newly generated flow as a flow to be set in the OFS 4i.

The switch control unit 331 sets the flow extracted from the flow table 334 by the flow management unit 332 in the OFS 4i as the notification source of the first-packet and the OFS 4i on the communication route connecting between the source device and the destination device regarding the packet.

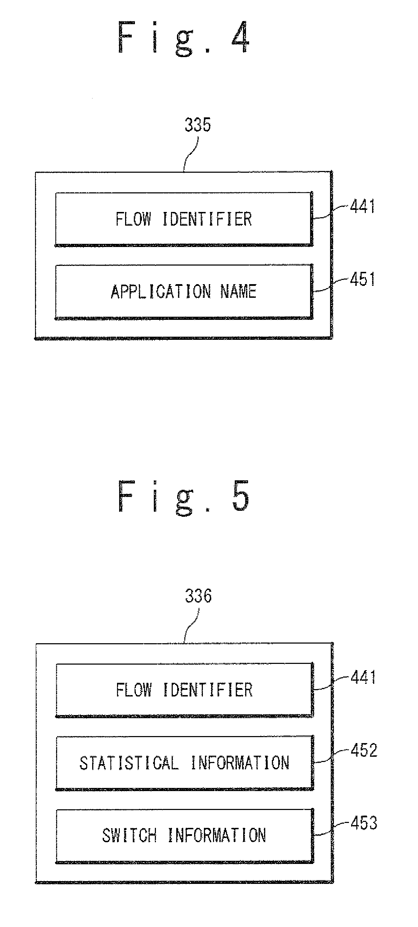

When receiving the notification of the first-packet, the flow management unit 332 uses the header information notified from the OFS 4i as a key to obtain, from the server 1, an application name associated with a flow to be newly set in the OFS 4i. As described above, the flow management unit 332 identifies, based on the header information, the source device and the destination device regarding the first-packet received by the OFS 4i. For example, the flow management unit 332 identifies the server 1 as a connection-destination of the client terminal 2 based on the destination MAC address and the destination IP address. The flow management unit 332 instructs the application identifying agent 10 of the server 1 identified based on the header information to identify application and also transmits L4 protocol information (protocol identifier) and one or both of the source TCP/IP port number and the destination TCP/IP port number in the notified header information to the application identifying agent 10. Then, the flow management unit 332 receives the application name as a response to the identifying instruction from the application identifying agent 10. In response to the notification of the first-packet, the flow management unit 332 associates the flow set in the OFS 4i as described above with the application name obtained from the application identifying agent 10 and records the correspondence relationship in an application-flow correspondence table 335. As shown in Fig. 4, the correspondence relationship between the flow identifier 441 given with respect to each flow and the application name 451 is recorded in the application-flow correspondence table 335.

The flow management unit 332 further has a function of collecting statistical information with respect to each flow from the group of OFSs 4. More specifically, as shown in Fig. 5, the flow management unit 332 records statistical information 452 (e.g. traffic volume) transmitted from the OFS 4i on a statistical table 336 with respect to each flow (flow identifier 441). Since the collected statistical information 452 is associated with the flow identifier 441, it is possible to collect the statistical information with respect to each application by linking the statistical table 336 and the application-flow correspondence table 335. Moreover, as shown in Fig. 5, the statistical information 452 may be associated with information (switch information 453) for identifying the OFS 4i that notifies the statistical information 452. In this case, it is possible to recognize the statistical information with respect to each switch. The switch information 453 may include the reception port of the switch that is notified from the OPS 4i. In this case, it is possible to monitor the statistical information with respect to the reception port of the OFS 4i.

The OFC 3 preferably has an output device (monitor) that visibly displays the statistical information with respect to the whole system or each application. The function of collecting the statistical information with respect to each application and the output device may be installed on a monitor device (not shown) separated from the OFC 3.

The flow generation unit 333 uses topology information to calculate the communication route and records the calculation result as communication route information on the memory device. Here, nodes serving as end-points of the communication route and switches/nodes on the communication route are set. Moreover, the flow generation unit 333 sets, based on the communication route information, the flow (rule 444 + action information 445) to be set in the switch and the node on the communication route.

The topology information includes information on connection statuses of the OPS 4i, the nodes (e.g. the servers 1, the client terminals 2, virtual servers operating on the server 1, and the like), the external network (e.g. the Internet) and the like. More specifically, the topology information recorded on the memory device includes a device identifier for identifying the switch and the node (device), the number of ports of the device, port destination information and the like that are associated with each other. The port destination information includes a connection type for identifying connection target (switch / node / external network) and information for identifying the connection destination (a switch ID in the case of the switch, a MAC address in the case of the node, an external network ID in the case of the external network).

The communication route information is information for identifying the communication route. More specifically, the communication route information recorded on the memory device includes end-point information that specifies a group of nodes (e.g. the server 1, the client terminal 2 and the like) or the external network interface as the end-point, and passage switch information that specifies a group of pairs of passage OFS 4i and its port and is associated with the end-point information. For example, if a communication route connects between a server 1 and a client terminal 2, respective MAC addresses of the server 1 and the client terminal 2 are recorded as the end-point information. The passage switch information includes the identifier of the OFS 4i that is provided on the communication route between the end-points indicated by the end-point information. The passage switch information may further include information for associating the OFS 4i with the flow (rule 444 + action information 445) set in the OFS 4i.

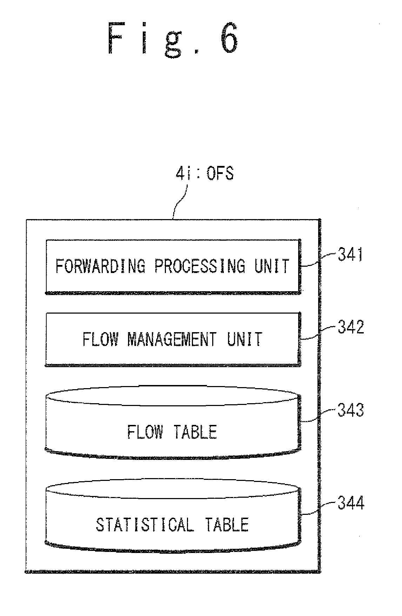

Fig. 6 is a diagram showing a configuration of the open flow switch 4i (OFS 4i) according to the present invention. The OFS 4i determines how to treat a received packet (i.e. action) in accordance with a flow table 343 that is set by the OFC 3. The OFS 4i has a forwarding processing unit 341 and a flow management unit 342. The forwarding processing unit 341 and the flow management unit 342 may be constituted by hardware or by software executed by a CPU.

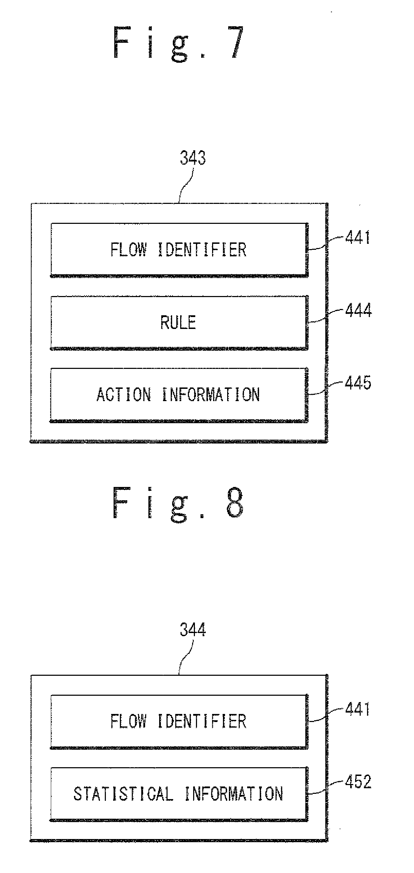

The flow table 343 as shown in Fig. 7 is set in a memory device of the OFS 4i. The flow management unit 342 sets a flow (rule 444 action: information 445) obtained from the OFS 3 in the flow table 343. In addition, if the header information of a received packet received by the forwarding processing unit 341 matches a rule 444 set in the flow table 343, the flow management unit 342 notifies the forwarding processing unit 341 of the action information 445 corresponding to the matching rule 444. On the other hand, if the header information of a received packet received by the forwarding processing unit 341 does not match a rule 444 set in the flow table 343, the flow management unit 342 recognizes the received packet as a first-packet, notifies the OFC 3 of the reception of the first-packet and transmits the header information to the OFS 3.

The forwarding processing unit 341 performs forwarding processing depending on the header information of the received packet. More specifically, the forwarding processing unit 341 extracts header information from a received packet data and notifies it to the flow management unit 342. When receiving the action information 445 from the flow management unit 342, the forwarding processing unit 341 performs processing in accordance with the action information 445. For example, the forwarding processing unit 341 forwards the received packet data to a node corresponding to the forwarding destination indicated by the action information 445. When receiving a packet data which does not match a rule 444 set in the flow table 343, the forwarding processing unit 341 retains the received packet data for a predetermined period of time and waits until the corresponding flow is set (i.e. the flow table 343 is updated) by the OFC 3.

As a concrete example, let us explain an operation of the OFS 4i in a case where the following flow is set; the rule 444: the source MAC address (L2) = "A1 to A3", the destination IP address (L3) = "B1 to B3", the protocol = "TCP" and the destination port number (L4) = "C1 to C3", and the action information 445: "relay to the application 101 of the server 1". If the OFS 4i receives a packet data whose source MAC address (L2) is "A1", destination IP address (L3) is "B2", protocol is "TCP" and destination port number (L4) is "C3", the OFS 4i determines that the header information matches the rule 444 and forwards the received packet data to the application 101. However, if the OFS 4i receives a packet data whose source MAC address (L2) is "A5", destination IP address (L3) is "B2", protocol is "TCP" and destination port number (L4) is "C4", the OFS 4i determines that the header information does not match the rule 444 and thus notifies the OFC 3 of the reception of a first-packet and transmits the header information to the OFC 3. The OFC 3 extracts a flow (rule 444 + action information 445) corresponding to the received header information from the flow table 334 and transmits the flow to the OFS 4i. It should be noted that if there is no appropriate flow in the flow table 334, the OFC 3 may generate a new flow. The OFS 4i sets the received flow in its own flow table 343 and accordingly executes relay processing for the received packet.

Usually, the flow set in the OFS 4i is deleted from the flow table 343 after a predetermined time has passed (the predetermined time until the deletion as well as the flow is set in the OFS 4i by the OFC 3).

The OFS 4i may further has a traffic monitoring function. More specifically, as shown in Fig. 8, the OFS 4i records statistical information 452 on a statistical table 344 with respect to each flow. The statistical information 452 (e.g. traffic volume) includes packet throughput (the number of processing times; e.g. the number of forwarding times), data length and the like that correspond to the flow table 343 within a predetermined period of time. Then, the OFS 4i transmits, to the OFC 3, the statistical information 452 with respect to each flow recorded with a predetermined period or in accordance with an instruction from the OFC 3. Here, the statistical information 452 is transmitted together with the associated flow identifier 441, to the OFC 3. For example, in the case where the statistical information is transmitted in accordance with the an instruction from the OFC 3, a flow identifier as a transmission target is specified by the OFC 3 and the OFS 4i transmits the statistical information 452 associated with the specified flow. It is preferable in terms of memory capacity in the OFS 4i that the statistical information that has been transmitted is deleted from the statistical table 344.

In a case of sFlow, for example, the statistical information of flow is generated by analyzing packets obtained in a predetermined sampling period. In this case, the result may be different from the actual traffic status, depending on the data transfer timing. However, the OFS 4i according to the present invention obtains data regarding packets with respect to each flow processing and uses it to generate the statistical information. It is therefore possible to obtain the statistical information corresponding to the actual traffic status regarding the monitoring target flow. Moreover, the OFS 4i treats only the flow matching the flow table 343 as the statistical information collection target and thus need not to perform the sampling processing, which is different from the case of the sFlow. It is therefore possible to reduce processing load in the OFS 4i for collecting the statistical information.

Hereinafter, an operation of monitoring processing with respect to each application in the above-described computer system will be described in detail.

### (Preparation for Monitoring and Flow Setup Processing)

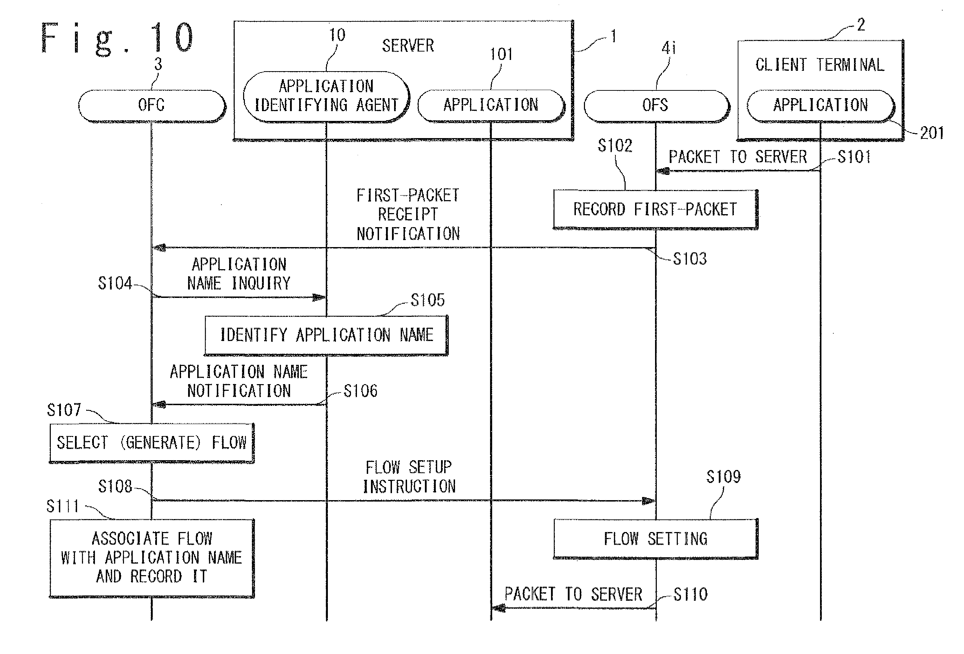

Fig. 10 is a sequence diagram showing an operation of preparation processing for system monitoring according to the present invention. In the computer system according to the present invention, the application performing the inter-application communication and the flow are associated with each other before the network is monitored. A detailed operation of associating the application with the flow will be described with reference to Fig. 10.

Here, let us consider a case where session is beforehand established between the server 1 (application 101) and the client terminal 2 (application 201) and TCP/IP port numbers are allocated to the respective applications. First, access for utilizing the application 101 of the server 1 is generated from the client-side. Here, a packet destined to the server is transmitted from the application 201 of the client terminal 2 (Step S101). When receiving the packet destined to the server, the OPS 4i reads the header information of the received packet and checks whether or not the head information matches a rule 444 of the flow set in the flow table 343. If the header information of the received packet does not match any rule 444 set in the flow table 343, the OFS 4i recognizes the received packet as a first-packet and records it on the memory device (Step S102).

The OFS 4i notifies the OFC 3 of the reception of the first-packet (Step S103). Here, the header information of the received packet and the switch information 453 for identifying the OFS 4i are notified to the OFC 3. In response to the first-packet receipt notification, the OFS 3 makes an inquiry to the application identifying agent 10 of the server 1 for an application name (Step S104). More specifically, the server 1 and the client terminal 2 serving as the end-points of the inter-application communication are identified based on the header information notified from the OFS 4i. The OFC 3 notifies the application identifying agent 10 of the server 1 identified as the packet destination of the inquiry about the application name as well as the destination TCP/IP port number and the source TCP/IP port number extracted from the header information.

The application identifying agent 10 of the server 1 uses the destination TCP/IP port number notified from the OFC 3 as a key to identify an application name to which the notified port number is allocated (Step S105). The identified application name is notified to the OFC 3 (Step S106).

Meanwhile, in response to the first-packet receipt notification in Step S103, the OFC 3 selects, from the flow table 334, a flow (rule 444 + action information 445) to be set in the OFS 4i (Step S107). More specifically, the OFC 3 selects, from the flow table, a flow associated with the notified header information and the identified end-point of the inter-application communication. Here, if there is no associated flow, the OFC 3 calculates a communication route from the topology information based on the header information and the identified end-point and then uses the communication route to generate a flow to be set in the OFS 4i. The OFC 3 instructs the OFS 4i to set the flow extracted from the flow table 334 (Step S108).

If there is heavy traffic on an output-destination line of the OFS 4i and communication quality cannot be secured when selecting or generating a flow, another flow that diverts to a line with less load may be selected or generated by reference to the port number of the packet. For example, the OFC 3 compares the port number of the packet with the port number regarding a priority application previously set, and if they match with each other, the OFC 3 selects or generates a flow that diverts to a line with less load.

The OFS 4i sets the flow (rule 444 + action information 445) transmitted from the OFS 3 in its own flow table 343 (Step S109. After the flow setting is completed, the OFS 4i forwards the first-packet (packet addressed to the server) that was recorded in Step S102 to the destination in accordance with the flow set in Step S109 (Step S110). Here, the packet is forwarded to the port destined to the server 1.

The OFC 3 determines the flow to be set in the OFS 4i in Step S107 and then associates the flow with the application name notified in Step S106 and records it on the application-flow correspondence table 335 (Step S111). As a result, the flow that is set in the OFS 4i for controlling data transfer between the application 101 and the application 201, the communication route of the flow and the application 101 of the server 1 are associated with each other. This information (application-flow correspondence table 335) is preferably displayed in a visible manner by an output device not shown.

The inquiry for the application name in Step S104 and the flow selection (generation) and setting instruction in Steps S107 and S108 are not limited to the above case but can occur in reverse order or concurrently. However, if the application corresponding to the port number is identified before the flow setting, the identified application can be taken into consideration to determine the output destination line of the OFS 4i and select or generate the corresponding flow. In this case, it is preferable that a correspondence table of the application and the output destination line in the OFS 4i is previously prepared in the memory device of the OFC 3 and then used for determining the output destination line corresponding to the application identified by the Step S106. As a result, even an output destination line which cannot be conventionally determined in the case of the flow using arbitrary port numbers can be determined. When utilizing such the method, it is preferable to perform the processing of identifying the application corresponding to the port number prior to the setting of the flow in the OFS 4i.

Due to the monitoring preparation processing as described above, the OFC 3 can associate the flow set in the OFS 4i for the inter-application communication, the communication route of the flow and the application performing the communication with each other. By obtaining the statistical information regarding the flow from the OFS i, the OFC 3 can monitor the traffic status with respect to each application.

According to the present invention, the port number obtained through the first-packet notification in the Open Flow technique is used as a key to identify the application name using the said port number. Thus, the OFC 3 can associate the flow (rule 444 + action information 445) controlling the application communication, the communication route of the flow and the application with each other. As a result, the OFC 3 can identify the flow set in the OFS 4i and the application corresponding to the communication route used in the communication, even if the port numbers are dynamically allocated to the applications (i.e. the port number is ANY).

### (Monitoring Processing)

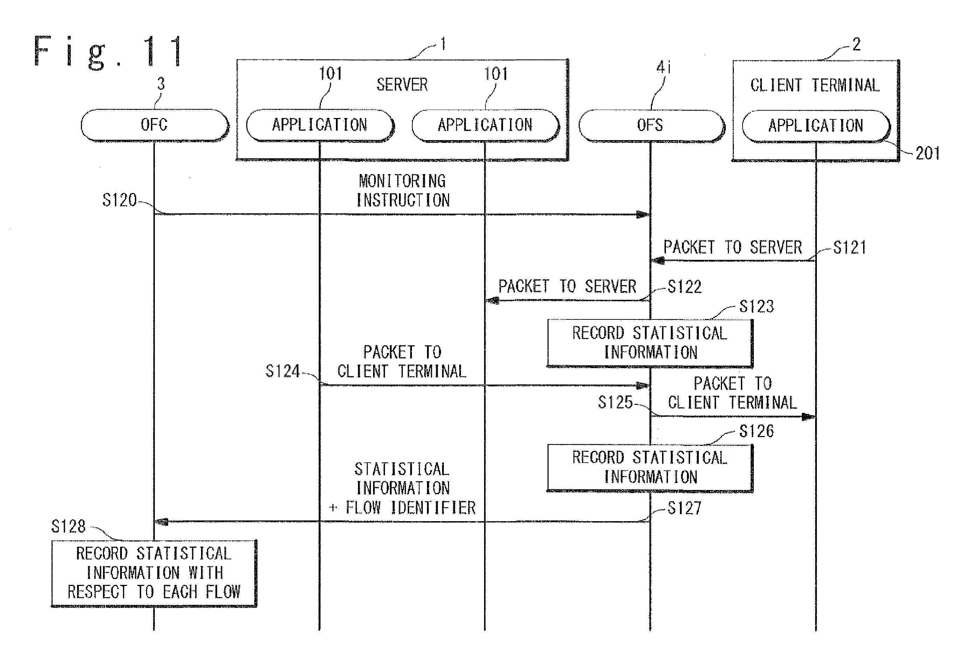

Fig. 11 is a sequence diagram showing an operation of statistical information acquisition processing for the system monitoring according to the present invention. The system monitoring processing according to the present invention will be described in detail with reference to Fig. 11.

The OFC 3, which has associated the application performing communication with the flow set in the OFS 4i by the above-described monitoring preparation processing, instructs the OFS 4i to perform traffic monitoring with regard to the flow (Step S120). The monitoring instruction includes the flow identifier 441 that specifies the monitoring target flow. The OFC 3 may issue an instruction that stops the traffic monitoring based on the identified application as described above.

In response to the monitoring instruction, the OFS 4i starts monitoring traffic with respect to the application 101 and the application 201. The OFS 4i Identifies a flow as the monitoring target based on the flow identifier 441 included in the monitoring instruction, obtains traffic volume and data length of packets treated based on the flow and records them on the statistical table. For example, when forwarding a packet addressed to the server transmitted from the application 201 of the client terminal 2 to the application 101 of the server 1 in accordance with the monitoring target flow, the OFS 4i records associates the statistical information 452 regarding the packet with the flow identifier 441 and records them on the statistical table 344 (Steps S121 to S123). Similarly, when forwarding a packet addressed to the client terminal transmitted from the application 101 of the server 1 to the application 201 of the client terminal 2 in accordance with the monitoring target flow, the OFS 4i associates the statistical information 452 regarding the packet with the flow identifier 441 and records them on the statistical table 344 (Steps S124 to S126).

The OFS 4i transmits the statistical information 452 recorded with a predetermined period and the associated flow identifier 441 to the OFC 3 (Step S127). At this time, the switch information 453 for identifying the OFS 4i also is notified. The transmission of the statistical information may be performed in response to an instruction from the OFC 3.

The OFC 3 records the statistical information 452 obtained from the OFS 4i on the statistical table 336 (Step S128). Since the statistical table 336 and the application-flow correspondence table 335 are linked through the flow identifier 441, the OFC 3 can record and visibly display the statistical information with respect to each application.

In some cases, depending on the application, there is no need to collect visualization information such as the statistical information and the communication route. Therefore, whether or not to collect the statistical information may be determined after the application is identified. For example, the application name identified in Step S106 is visibly displayed and then a user may determine whether or not to collect the statistical information. Alternatively, information indicating the application that requires collection of the statistical information is beforehand set in the OFC 3, and then this information may be used for determining whether or not to obtain the statistical information. As a result, collecting unnecessary statistical information can be omitted. It should be noted that whether or not to collect the statistical information and the communication route may be determined by using the flow to be set in the OFS 4i.

According to the present invention, as described above, it is possible to perform the traffic monitoring and the flow (rule 444 + action information 445) setting with respect to each application, regardless of whether the port numbers are allocated to the applications in a fixed manner or dynamically.

Next, application examples of the computer system according to the present invention will be described. Specifically, the monitoring preparation processing in the following cases will be described hereinafter: (1) monitoring of inter-application communication where a well-known port number is allocated to an application on the server-side; (2) monitoring of inter-application communication where port numbers are dynamically allocated to applications of both end-points; and (3) monitoring of inter-application communication performed through a load balancer.

### (1) First exemplary embodiment: monitoring of inter-application communication where a well-known port number is allocated to an application on the server-side

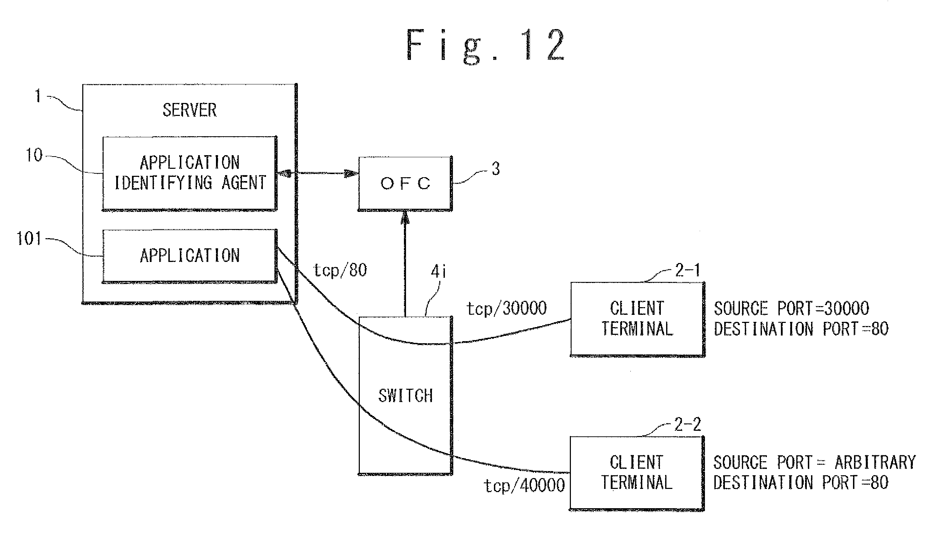

Fig. 12 is a diagram for explaining a method of monitoring the inter-application communication in the first exemplary embodiment. As an example, let us consider here a case where a plurality of client terminals 2-1 and 2-2 communicate with the server 1 serving as a Web server. A well-known port number "80" is allocated in a fixed manner to the application 101 of the server 1.

For example, in a case where a port number "30000" is allocated in a fixed manner to the application of the client terminal 2-1, the OFS 4i transmits a first-packet receipt notification to the OFC 3 in response to access from the client terminal 2-1 to the application 101. Here, the OFS 4i notifies the OFC 3 of the destination port number "80" and the source port number "30000" that are extracted from the header information of the received packet. The OFC 3 requests the application identifying agent 10 for application names associated with the destination port number "80" and the source port number "30000". Moreover, the OFC 3 sets, based on the first-packet receipt notification, a flow for controlling the communication between the server 1 and the client terminal 2-1 in the OFS 41.

The application identifying agent 10 identifies an application name (the application 101) associated with the destination port number "80" and an application name (the application of the client terminal 2-1) associated with the source port number "30000" and notifies the OFC 3 of them. The OFC 3 records, on the application-flow correspondence table 335, the correspondence relationship between the notified application names and the flow set in the OFS 4i.

It should be noted that if the OFC 3 is beforehand provided with a correspondence table of the fixedly-allocated port numbers and the applications, the OFC 3 can associate the application and the flow by reference to the correspondence table without inquiring the above-mentioned application identifying agent 10 for the application name.

On the other hand, if the source port number of the application of the client terminal 2-2 is "ANY", a port number is dynamically allocated by the destination server 1 to the application 101 of the server 1 at the time when session with the application 101 is established. Here, let us consider a case where the port number "40000" is allocated.

In response to access from the client terminal 2-2 to the application 101, the OFS 4i notifies the OFC 3 of not only a first-packet receipt notification but also the destination port number "80" and the source port number "40000" that are extracted from the header information of the received packet. The OFC 3 requests the application identifying agent 10 for application names associated with the destination port number "80" and the source port number "40000". Moreover, the OFC 3 sets, based on the first-packet receipt notification, a flow for controlling the communication between the server 1 and the client terminal 2-1 in the OFS 4i.

The application identifying agent 10 identifies an application name (the application 101) associated with the destination port number "80" and an application name (the application of the client terminal 2-2) associated with the source port number "40000" and notifies the OFC 3 of them. The OFC 3 records, on the application-flow correspondence table 335, the correspondence relationship between the notified application names and the flow set in the OFS 4i.

According to the present invention, as described above, the application performing the communication is associated with the flow regardless of whether the port number is fixedly or dynamically allocated to the application of the client terminal 2 as the access source, and it is thus possible to monitor the statistical information with respect to each application. In the case of the example described above, the OFS 4i transmits the statistical information regarding the packets whose destination port number and source port number are "80" and "30000", respectively, to the OFC 3, which enables monitoring the statistical information regarding the communication between the client terminal 2-1 and the application 101. Moreover, the OFS 4i transmits the statistical information regarding the packets whose destination port number and source port number are "80" and "40000", respectively, to the OFC 3, which enables monitoring the statistical information regarding the communication between the client terminal 2-2 and the application 101.

### (2) Second exemplary embodiment: monitoring of inter-application communication where port numbers are dynamically allocated to applications of both end-points

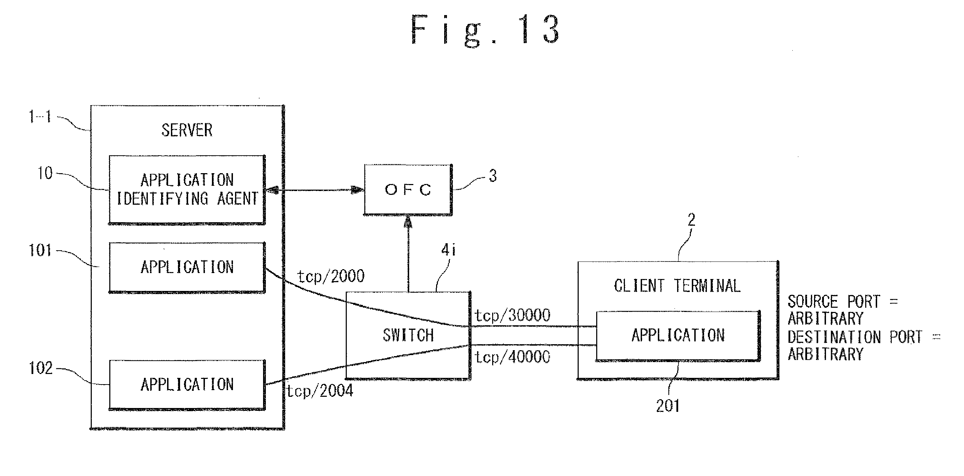

Fig. 13 is a diagram for explaining a method of monitoring the inter-application communication in the second exemplary embodiment. As an example, let us consider here a case where communication is performed between one client application and a plurality of server applications. In this case, the port number of each of the applications 101 and 102 of the server 1 is "ANY" and the port number of the application 201 of the client terminal 2 also is "ANY".

When session is established between the application 202 and the plurality of applications 101 and 102, port numbers are dynamically allocated by the access destination server 1 to the applications 101, 102 and 202. Here, let us consider a case where a port number "2000" is allocated to the application 101 and a port number "30000" is allocated to the application 201 regarding the communication between the application 101 and the application 201, and a port number "2004" is allocated to the application 102 and a port number "40000" is allocated to the application 201 regarding the communication between the application 102 and the application 201.

In response to access from the application 201 to the application 101, the OFS 4i notifies the OFC 3 of not only a first-packet receipt notification but also the destination port number "2000" and the source port number "30000" that are extracted from the header information of the received packet. The OFC 3 requests the application identifying agent 10 for application names associated with the destination port number "2000" and the source port number "30000". Moreover, the OFC 3 sets, based on the first-packet receipt notification, a flow for controlling the communication between the application 101 and the application 201 in the OFS 4i.

The application identifying agent 10 identifies an application name (the application 101) associated with the destination port number "2000" and an application name (the application 201 of the client terminal 2) associated with the source port number "30000" and notifies the OFC 3 of them. The OFC 3 records, on the application-flow correspondence table 335, the correspondence relationship between the notified application names and the flow set in the OFS 4i.

Similarly, in response to access from the application 201 to the application 102, the OFS 4i notifies the OFC 3 of not only a first-packet receipt notification but also the destination port number "2004" and the source port number "40000" that are extracted from the header information of the received packet. The OFC 3 requests the application identifying agent 10 for application names (applications 102 and 201) associated with the destination port number "2004" and the source port number "40000". Moreover, the OFC 3 sets, based on the first-packet receipt notification, a flow for controlling the communication between the application 102 and the application 201 in the OFS 4i. Then, the OFC 3 records, on the application-flow correspondence table 335, the correspondence relationship between the notified application names and the flow set in the OFS 4i.

According to the present invention, as described above, it is possible to identify the application associated with the flow set in the OFS 4i and to monitor the statistical information with respect to each application, even when the client terminal 2 transmits and receives packets by using arbitrary TCP/IP port numbers as in a case where a plurality of server applications are used concurrently. In the case of the example described above, the OFS 4i transmits the statistical information regarding the packets whose destination port number and source port number are "2000" and "30000", respectively, to the OFC 3, which enables monitoring the statistical information regarding the communication between the application 201 and the application 101. Moreover, the OFS 4i transmits the statistical information regarding the packets whose destination port number and source port number are "2004" and "40000", respectively, to the OFC 3, which enables monitoring the statistical information regarding the communication between the application 201 and the application 101.

### (3) Third exemplary embodiment: monitoring of inter-application communication performed through a load balancer

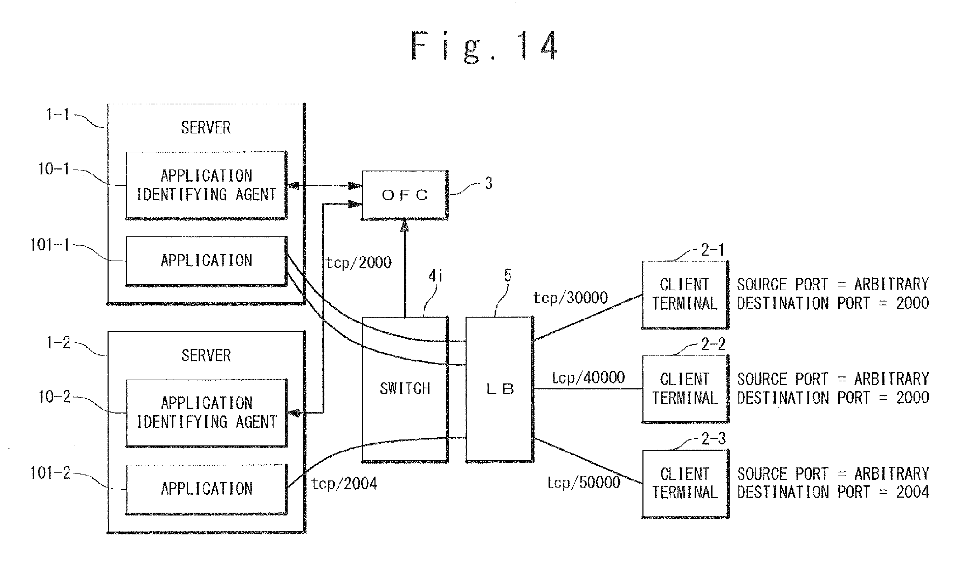

Fig. 14 is a diagram for explaining a method of monitoring the inter-application communication in the third exemplary embodiment. As an example, let us consider here a case where the inter-application communication is performed in a system provided with a load balancer 5 between the client terminal 2 and the group of OFSs 4. As shown in Fig. 14, the load balancer 5 is provided between a plurality of client terminals 2-1 to 2-3 and the group of OFSs 4 and performs load balancing with respect to applications 101-1 and 102-2 of a plurality of servers 1-1 and 1-2. Here, let us consider a case where the same port number "2000" is fixedly allocated to the application 101-1 of the server 1-1 and the application 101-2 of the server 1-2. Moreover, the port number of the application of each of the client terminals 2-1 to 2-3 is "ANY".

When session is established between the application 101-1 of the server 1-1 and the application 101-2, port numbers are dynamically allocated by the access destination server to the applications of the respective client terminals 2-1 to 2-3. Here, let us consider a case where a port number "30000" is allocated to the client terminal 2-1, a port number "40000" is allocated to the client terminal 2-2 and a port number "50000" is allocated to the client terminal 2-3.

In response to access from the client terminal 2-1 to the application 101, the OFS 4i notifies the OFC 3 of not only a first-packet receipt notification but also the destination port number "2000" and the source port number "30000" that are extracted from the header information of the received packet. The OFC 3 identifies a destination server based on the destination IP address, the destination MAC address and the like included in the first-packet receipt notification. Here, the server 1-1 is identified as the destination. The OFC 3 requests the application identifying agent 10-1 of the server 1-1 for application names associated with the destination port number "2000" and the source port number "30000". Moreover, the OFC 3 sets, based on the first-packet receipt notification, a flow for controlling the communication between the server 1-1 and the client terminal 2-1 (load balancer 5) in the OFS 4i.

The application identifying agent 10-1 identifies an application name (the application 101-1 of the server 1-1) associated with the destination port number "2000" and an application name (the application of the client terminal 2-1) associated with the source port number "30000" and notifies the OFC 3 of them. The OFC 3 records, on the application-flow correspondence table 335, the correspondence relationship between the notified application names and the flow set in the OFS 4i.

Similarly, the OFS 3 records, on the application-flow correspondence table 335, the correspondence relationship between the application and the flow regarding other inter-application communication between the client terminals 2-2 and 2-3 and the servers 1-1 and 1-2. For example, the OFC 3 records, on the application-flow correspondence table 335, a correspondence relationship between the application name (the application 101-1 of the server 1-1) associated with the destination port number "2000", the application name (the application of the client terminal 2-1) associated with the source port number "40000" and the flow set in the OFS 4i on the route between the applications. Alternatively, the OFC 3 records, on the application-flow correspondence table 335, a correspondence relationship between the application name (the application 101-2 of the server 1-2) associated with the destination port number "2004", the application name (the application of the client terminal 2-2) associated with the source port number "50000" and the flow set in the OFS 4i on the route between the applications.

The OFS 4i transmits the statistical information regarding the packets whose destination port number and source port number are "2000" and "30000", respectively, to the OFC 3, which enables monitoring the statistical information regarding the communication between the application 201 of the client terminal 2-1 and the application 101-1. Moreover, the OFS 4i transmits the statistical information regarding the packets whose destination port number and source port number are "2000" and "40000", respectively, to the OFC 3, which enables monitoring the statistical information regarding the communication between the application 201 of the client terminal 2-2 and the application 101-1. Furthermore, the OFS 4i transmits the statistical information regarding the packets whose destination port number and source port number are "2004" and "50000", respectively, to the OFC 3, which enables monitoring the statistical information regarding the communication between the application 201 of the client terminal 2-3 and the application 101-2.

According to the computer system of the present invention, as described above, it is possible to monitor the inter-application communication where the port number is dynamically allocated to the applications. As a result, the traffic volume can be visualized with respect to each application. For example, it is possible to reveal which of the followings causes traffic congestion: increase in load on a CPU of the server or increase in traffic volume of the application communication. Moreover, it is possible to perform fault recovery and congestion control with respect to each application by controlling the flow depending on the visualized statistical information with respect to each application. Furthermore, centralized control of the processing of visualization, fault recovery and the like can be performed by the OFC 3. Conventionally, application management on the server side (IT side) and management on the network side has been performed separately. However, the present invention makes it possible to perform centralized management of them. That is to say, according to the present invention, it is possible to achieve IT-network integrated visualization by associating the communication flow with the application using the communication flow.

Moreover, the OFS 4i sets only a flow matching the flow table 343 as the statistical information collection target. For example, in a case of the sFlow where the statistical information is collected at a predetermined sampling timing, a packet out of the sampling timing is excluded from the sampling target, which deteriorates accuracy of the statistical information. According to the present invention, the packet sampling is performed and the statistical information is generated every time the processing based on the flow is performed (that is, every time the monitoring target packet is received). Therefore, accuracy of the statistical information is improved with reducing the processing load of the sampling.

While the exemplary embodiments of the present invention have been described in detail above, the concrete configuration is not limited to the above-described exemplary embodiments and various changes may be made without departing from the spirit and scope of the present invention. Any ones of the monitoring methods in the above-described first to third exemplary embodiments can be combined with each other as long as no technical contradiction arises. The application identifying agent 10 may be installed in the client terminal 2. In this case also, the client terminal 2 notifies the OFC 3 of the application name using the inquired port number, as in the above-described case. While the communication between the server 1 and the client terminal 2 has been described in the above exemplary embodiments, the present invention can also be applied to monitoring of communication between a plurality of servers 1-1 and 1-2.

This application is based upon and claims the benefit of priority from Japanese patent application No. 2009-233888, the disclosure of which is incorporated herein in its entirely by reference.

## Claims

1. A computer system comprising:
a switch configured to forward a received packet data to a destination in accordance with flow that is set in the switch;
a controller configured to set flow with respect to said switch, in response to first-packet receipt notification from said switch; and
a server having an application,
wherein if the received packet data does not match a rule indicated by the flow that is set in said switch, said switch transmits the first-packet receipt notification to said controller and notifies said controller of a port number included in said received packet data, and
wherein said controller obtains, from said server, an application name of an application using said port number and records, on a memory device, a correspondence relationship between said application name and the flow that is set with respect to said switch.

2. The computer system according to claim 1,
wherein said server comprises an application identifying agent configured to use the port number notified from said controller as a key to identify an application to which said notified port number is allocated, and notify said controller of an application name of the identified application.

3. The computer system according to claim 1 or 2,
wherein at a time of said first-packet receipt notification, said switch notifies said controller of the port number and an IP address included in the received packet, and
wherein said controller obtains the application name associated with said port number from the server determined based on said IP address.

4. The computer system according to any one of claims 1 to 3,
wherein said switch notifies said controller of statistical information regarding packet data corresponding to the flow that is set in the switch, and
wherein said controller records, on said memory device, a correspondence relationship between said statistical information and the application associated with the flow that is set with respect to said switch.

5. The computer system according to any one of claims 1 to 4,
wherein said controller determines, based on the application name obtained from said server, a destination line for said received packet of said switch and sets flow depending on said destination line with respect to said switch.

6. The computer system according to any one of claims 1 to 5,
further comprising: a client terminal configured to transmit a packet data to said server through said switch,
wherein said server dynamically allocates a port number to said application every time session with said client terminal is established.

7. A controller that is used in the computer system according to any one of claims 1 to 6.

8. A method of monitoring a computer system,
wherein said computer system comprises:
a switch configured to forward a received packet data to a destination in accordance with flow that is set in the switch; and
a controller configured to set flow with respect to said switch, in response to first-packet receipt notification from said switch,
wherein said method comprises:
transmitting, by said switch, the first-packet receipt notification to said controller and notifies said controller of a port number included in said received packet data, if the received packet data does not match a rule indicated by the flow that is set in said switch;
obtaining from a server, by said controller, an application name of an application using said port number; and
recording on a memory device, by said controller, a correspondence relationship between said application name and the flow that is set with respect to said switch.

9. The method of monitoring the computer system according to claim 8,
wherein said obtaining said application name comprises:
using, by said server, the port number notified from said controller as a key to identify an application to which said notified port number is allocated; and
notifying, by said server, said controller of an application name of the identified application.

10. The method of monitoring the computer system according to claim 8 or 9, further comprising: notifying, by said switch, said controller of the port number and an IP address included in the received packet, at a time of said first-packet receipt notification,
wherein said obtaining said application name comprises: determining based on said IP address, by said controller, the server to which request for the application name is transmitted.

11. The method of monitoring the computer system according to any one of claims 8 to 10, further comprising:
notifying, by said switch, said controller of statistical information regarding packet data corresponding to the flow that is set in the switch; and
recording on said memory device, by said controller, a correspondence relationship between said statistical information and the application associated with the flow that is set with respect to said switch.

12. The method of monitoring the computer system according to any one of claims 8 to 11, further comprising:
determining based on the application name obtained from said server, by said controller, a destination line for said received packet of said switch; and
setting, by said controller, flow depending on said destination line with respect to said switch.

13. The method of monitoring the computer system according to any one of claims 8 to 12, further comprising:
transmitting, by a client terminal, a packet data to said server through said switch; and
dynamically allocating, by said server, a port number to said application every time session with said client terminal is established.
